# EUROPEAN PATENT APPLICATION

(11) **EP 2 388 691 A1**
(43) Date of publication of application: **23.11.2011**
(21) Application number: 10305538.0
(22) Date of filing: 20.05.2010
(51) Int. Cl.: G06F 9/44

(54) **System and method for avatar interaction on remote desktop**

(71) Applicant: Alcatel Lucent, 75007 Paris (FR)
(72) Inventor: Van Broeck, Sigurd, 2980 Zoersel (BE); Geerts, Marjan, 2940 Stabroek (BE)
(74) Representative: ALU Antw Patent Attorneys

(57) **Abstract**

A remote control system and a method used therein to assist a user of a remote user PC equipment (UPC) from an assistance PC equipment (APC) operating in a virtual environment. The method consists in embedding a live copy of the user's display (USCR), preferably with a live view (U3DV) of the user's real environment captured by video input means (WCM1, WCM2), into the virtual environment of the assistant, and in providing control means (APC_In) at the assistance PC equipment for operating the user PC equipment from this assistance PC equipment. The method further consists in creating an assistance avatar (AA) of which the movements are associated to the operations of the control means, and in displaying a user visualization (UAA) of the assistance avatar in overlay onto the user's display (USCR) by means of a user control logic (AvC). The system further comprises an assistant control logic (AvS) adapted to display an assistant visualization (AAA) of the assistance avatar into the virtual environment of the assistant between the live copy of the user's display and the live view of the user's real environment.

## Description

The present invention relates to a method to assist a user of a remote user PC equipment from an assistance PC equipment, said method comprising the steps of
- embedding a live copy of the display of said user PC equipment into a virtual environment at said assistance PC equipment; and
- providing control means at said assistance PC equipment for operating said user PC equipment from said assistance PC equipment,

Computer assistants operating at an assistance PC equipment, e.g. a helpdesk, can provide remote PC assistance by taking over input control (mouse, keyboard, Webcam, etc) and display (screen) of the user PC equipment of a person (user) in need of help. The user can observe the assistant manipulating the cursor on the display and giving keyboard and mouse input. Often, an additional voice communication between the user and the assistant has been established in parallel, normally before control has been taken over by the assistant.

Neither the assistant nor the user has means of expressing themselves towards each other then with voice. Alternatively, a video communication between the user and the assistant can be established in parallel so that they can observe each other to get some facial feedback.

The experience resulting from such technical solution is for both parties quite different from the experience resulting from a solution where the assistant physically approaches the user in order to solve the problem on the spot.

It is already possible to show a remote desktop (user display) in the virtual environment of the assistance PC equipment by integrating remote desktop client code inside a virtual world server. However, this solution bypasses information provided by the virtual world server, the server does not see the information from the desktop.

Such kind of solution does not provide the experience that a physical encounter of assistant and user would provide. Furthermore, a separate voice and/or video communication channel is still needed.

An object of the present invention is to provide a method of the above known type but that provides an experience that is far more closer to the physical presence solution.

According to a characterizing embodiment of the invention, this object is achieved due to the fact that said method further comprises the steps of
- creating an assistance avatar of which the movements are associated to the operations of said control means at the assistance PC equipment; and
- displaying a user visualization of said assistance avatar in overlay onto said display of the user PC equipment.

In this way, by showing the avatar of the assistant to the user, the above remote desktop/assistance is extended such that the experience dramatically approaches real life on-the-spot help.

The user visualization of the assistance (or assistant) avatar may appear as manipulating the user PC equipment from time to time although this is performed by the control means at the assistance PC equipment.

Another characterizing embodiment of the present invention is that said method comprises the step of displaying an assistant visualization of said assistance avatar into said virtual environment at the assistance PC equipment.

The assistant is thereby able to "move" in a virtual world wherein he can see his own avatar having a view and a control to the user PC equipment.

Also another characterizing embodiment of the present invention is that said method comprises the steps of
- capturing a live view of the real environment of said user PC equipment; and
- displaying said live view into said virtual environment at the assistance PC equipment.

The assistant may then, from time to time in his virtual environment, look at the user. This action is not trivial since facial expressions may give the assistant feedback on whether the user understood what happened or not.

In a preferred characterizing embodiment of the present invention, said method comprises the step of displaying said assistant visualization of the assistance avatar into said virtual environment at the assistance PC equipment between said live copy of the display of the user PC equipment and said live view of the real environment of the user PC equipment.

In this way, when the assistant comes to the user in need of help, he will position himself in-between the user and the user's screen.

The present invention further relates to a user PC equipment remotely coupled to an assistance PC equipment associated to a virtual world server, wherein said assistance PC equipment is adapted to receive a live copy of the display of said user PC equipment into a virtual environment, and said assistance PC equipment is provided with control means adapted to operate said user PC equipment.

In order to achieve the above object of providing an experience that is far more closer to the physical presence solution, this embodiment is characterized in that said virtual world server is adapted to create an assistance avatar of which the movements are associated to the operations of said control means at the assistance PC equipment, and in that said remote control system further comprises a user control logic adapted to display a user visualization of said assistance avatar in overlay onto said display of the user PC equipment.

Such a remote control system provides an innovative and intuitive solution to many situations where remote communication is needed.

Another characterizing embodiment of the present invention is that said remote control system further comprises an assistant control logic adapted to display an assistant visualization of said assistance avatar into said virtual environment at the assistance PC equipment.

The assistant visualization of the assistance avatar helps the assistant to visualize the operations on the user PC equipment.

Also another characterizing embodiment of the present invention is that said user PC equipment is provided with video input means adapted to capture a live view of the real environment of said user PC equipment, and that said assistant control logic is further adapted to display said live view into said virtual environment at the assistance PC equipment.

Owing to the video input means, which are for instance webcams, the assistant has a view on the user's environment.

Yet another characterizing embodiment of the present invention is that said control means of the assistance PC equipment are input controls adapted to control operations of said user PC equipment, and that said user control logic is further adapted to associate at least the position, orientation, movement and rotation of said user visualization of the assistance avatar to said operations of the user PC equipment.

These input controls are for instance keyboard, mouse, trackball, Wii^{™}, camera input means, touch screen, voice instructions, ...

In a characterizing embodiment of the present invention, said remote control system operates as a client-server system wherein said user control logic is coupled between said virtual world server and said user PC equipment, and wherein assistant control logic is located in said virtual world server.

In another characterizing embodiment of the present invention, said remote control system operates as a peer-to-peer system wherein said user control logic is coupled between said assistance PC equipment and said user PC equipment, and wherein said assistant control logic is located in said assistance PC equipment.

It is to be noted that the remote control system is adapted to operate according to the above-mentioned method

Further characterizing embodiments of the present method and remote control system are mentioned in the appended claims.

It is to be noticed that the terms "comprising" or "including", used in the claims, should not be interpreted as being restricted to the means listed thereafter. Thus, the scope of an expression such as "a device comprising means A and B" should not be limited to an embodiment of a device consisting only of the means A and B. It means that, with respect to embodiments of the present invention, A and B are essential means of the device.

Similarly, it is to be noticed that the term "coupled", also used in the claims, should not be interpreted as being restricted to direct connections only. Thus, the scope of the expression such as "a device A coupled to a device B" should not be limited to embodiments of a device wherein an output of device A is directly connected to an input of device B. It means that there may exist a path between an output of A and an input of B, which path may include other devices or means.

It is finally to be noticed that the term "virtual environment" or "virtual world server" refers to a computer-simulated environment that can be a mirror of the real environment such as "Google Maps"™ as well as an imaginary environment such as "World of Warcraft"™ and that can be in pseudo-3D or in 3D.

The above and other objects and features of the invention will become more apparent and the invention itself will be best understood by referring to the following description of an embodiment taken in conjunction with the accompanying drawings wherein:
Fig. 1 represents an implementation of the system and method for avatar interaction on a remote desktop according to the invention;
Fig. 2 represents another implementation of the present system and method;
Fig. 3 is a visual representation of the virtual environment of the assistant using the method of Fig. 1 or Fig. 2;
Fig. 4 is a visual representation of the environment of the remote user helped by the assistant of Fig. 3; and

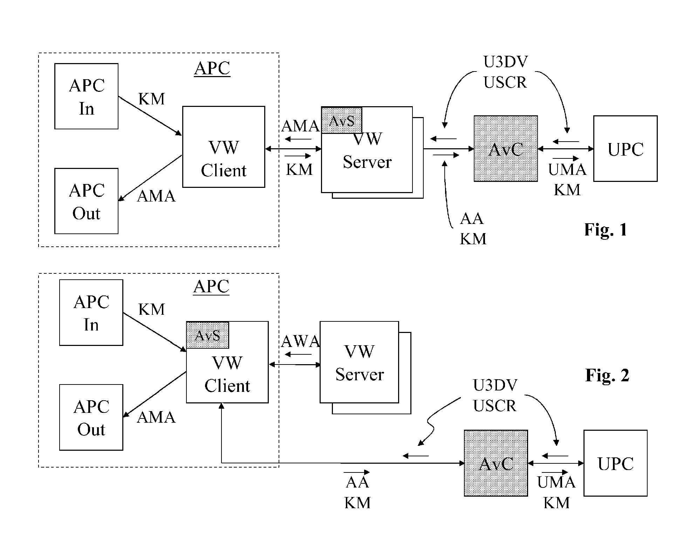

A remote control system comprising a user or client PC equipment UPC remotely coupled to an assistance PC equipment APC is shown at the Figs. 1 and 2.

The assistant PC equipment APC operates in a virtual environment, preferably a 3D virtual environment, controlled by a virtual world client VW_Client coupled to an external virtual world server VW_Server and displayed at output means APC_Out of APC.

The output means APC_Out of the assistant PC equipment APC receive a live copy of the display USCR of the user PC equipment UPC that is embedded into the virtual environment of APC.

The assistant PC equipment APC is further provided with control means APC_In. These control means APC_In are input controls, such as for instance a keyboard and/or a mouse KM, able to control operations on the remote user PC equipment UPC.

The virtual world server VW_Server creates an assistance avatar AA of which the movements are associated to the operations of the input control means APC_In of the assistance PC equipment APC.

The remote control system further comprises an assistant control logic AvS able to display an assistant visualization AAA of the assistance avatar AA into the virtual environment of the assistance PC equipment APC. The assistant visualization AAA of the assistance avatar AA is a visual representation in the 3D virtual environment of at least the position, orientation, movement and rotation of the assistance avatar.

The remote control system also comprises a user control logic AvC adapted to display a user visualization UAA of the assistance avatar AA in overlay onto the display USCR of the user PC equipment UPC. The position, orientation, movement and rotation of the displayed user visualization of the assistance avatar AA is relative to the position, orientation, movement and rotation of the assistant visualization AAA of this same assistance avatar AA in the virtual environment of the assistance PC equipment APC.

The user control logic AvC further associates at least the above position, orientation, movement and rotation of the user visualization UAA of the assistance avatar AA to the operations on the user PC equipment UPC by the control means APC_In of the assistance PC equipment APC.

In a first embodiment, shown at Fig. 1, the remote control system operates as a client-server system wherein the user PC equipment UPC is coupled to the virtual world server VW_Server and so further of the virtual world client VW_Client of the assistant PC equipment APC. In this client-server system, the user control logic AvC is coupled between the virtual world server VW_Server and the user PC equipment UPC, whilst the assistant control logic AvS is located in the virtual world server VW_Server.

In a second embodiment, shown at Fig. 2, the remote control system operates as a peer-to-peer system wherein the user PC equipment UPC is coupled to the virtual world client VW_Client of the assistant PC equipment APC. In this peer-to-peer system, the user control logic AvC is coupled between the assistance PC equipment APC and the user PC equipment UPC, whilst the assistant control logic AvS is located in the assistance PC equipment APC; preferably in the virtual world client VW_Client thereof.

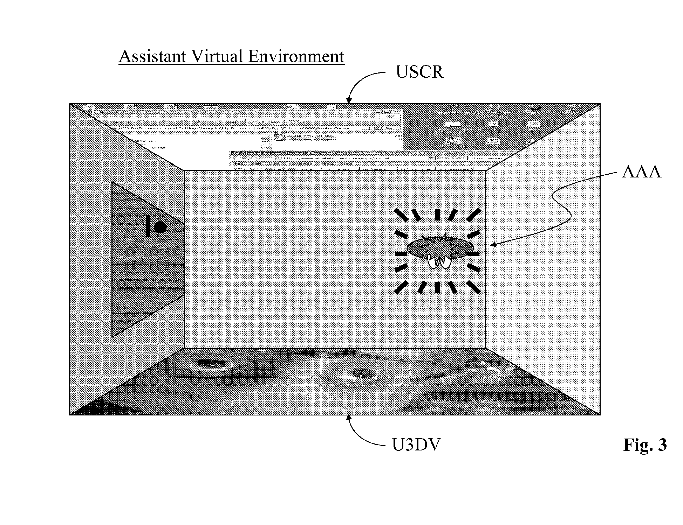

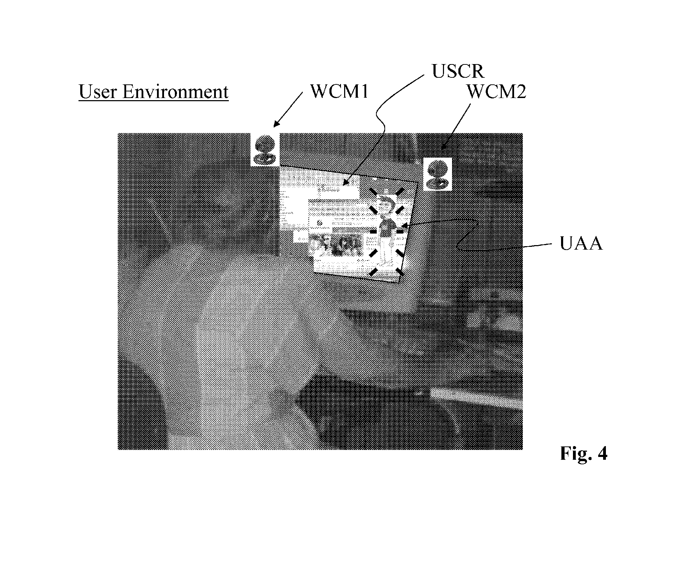

In both embodiments, the user PC equipment UPC, or user environment as shown at Fig. 4, is preferably provided with video input means WCM1, WCM2, or any other mono- or multi-camera configuration, adapted to capture a live view U3DV of the real environment of the user PC equipment UPC. The live view U3DV is merged with the other items of the 3D environment of the assistant PC equipment APC by the assistant control logic AvS. The resulting assistant virtual environment is displayed at the output means APC_Out of the assistant PC equipment APC, as shown at Fig. 3.

Referring again to the embodiment of Fig. 2, the output AWA of the virtual world server VW_Server towards the virtual world client VW_Client comprises a merged view of the assistant virtual world together with the assistance avatar AA. The assistant control logic AvS of the assistant PC equipment APC combines this output AWA with the live copy of the display USCR and the live view U3DV of the user PC equipment UPC, received via the user control logic AvC, into the assistant virtual environment AMA displayed on the output means APC_Out of the assistant PC equipment APC.

In the embodiment of Fig. 1, the assistant virtual environment AMA is available at the output of the assistant control logic AvS included in the virtual world server VW_Server. This environment AMA, comprising merged information of the assistant virtual world, the assistance avatar AA, the live copy of the display USCR and the live view U3DV of the user PC equipment UPC, is transmitted from the virtual world server VW_Server to the virtual world client VW_Client and so further to the output means APC_Out of the assistant PC equipment APC.

In both embodiments, the user control logic AvC receives the assistance avatar AA from the assistant control logic AvS and provides the user visualization UAA thereof.

The user control logic AvC on the client side (user side) further superimposes the user visualization UAA of the assistance avatar AA on top of the user's desktop screen or display USCR in line with the appearance and movement of the assistance avatar AA in the virtual world. The user control logic AvC will also allow the user visualization UAA of the assistance avatar AA to operate as, e.g., a (multi-) mouse pointer and keyboard so that it can manipulate the content on the user's desktop screen USCR as if it was manipulated by the locally connected (multi-) mouse and keyboard KM of the control means APC_In of the assistance PC equipment APC. The resulting information UMA is transmitted to the user PC equipment UPC.

The user environment of Fig. 4 shows the user visualization UAA of the assistance avatar AA appearing in overlay on the display USCR of the user PC equipment UPC is. As such, the user visualization UAA of the assistance avatar AA is effectively located between the user and his screen.

On the other hand, the assistant control logic AvS on the server side, in the virtual world, catches the actions performed by the assistance avatar AA on the remote display USCR under control of the control means APC_In of the assistance PC equipment APC and transmits them as (multi-) mouse pointer and keyboard input KM towards the real remote display at the user PC equipment UPC.

The assistant virtual environment of Fig. 3 shows the assistant visualization AAA of the assistance avatar AA inside a virtual room where he is as such located between the live copy of the display or screen of the user USCR and the live view U3DV of the user himself. Both are projected on opposite sides of the room.

As a result, the assistant manipulating the assistant visualization AAA of the assistance avatar AA in the virtual world will be able to virtually fly between the remote desktop screen USCR of the user sitting behind the desktop and the streaming image U3DV of the user himself. While flying, the assistance avatar AA can "touch" the remote desktop screen USCR and as such generate actions on this desktop like, e.g., closing a window. The assistance avatar AA can also turn around with his back towards the user's desktop screen USCR facing the streaming image U3DV of the user. The assistant visualization AAA of the assistance avatar AA thus appears to be flying in the air between the user and his user PC equipment UPC, and will from time to time look at the user. The latter is not a trivial action since facial expressions give the assistant feedback on whether the user understood what happened or not.

Furthermore, the user sitting behind his desktop will perceive the user visualization UAA of the assistance avatar AA as flying between him and his desktop screen or display USCR.

The present remote control system and method used thereby can for instance also be used in teaching environments. The experience becomes even more realistic if the desktop screen is an (auto-) stereoscopic screen. The system and method can further also be used for mobile, IPTV and other devices.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method to assist a user of a remote user PC equipment (UPC) from an assistance PC equipment (APC), said method comprising the steps of
- embedding a live copy of the display (USCR) of said user PC equipment into a virtual environment at said assistance PC equipment; and
- providing control means (APC_In) at said assistance PC equipment for operating said user PC equipment from said assistance PC equipment,
**characterized in that** said method further comprises the steps of
- creating an assistance avatar (AA) of which the movements are associated to the operations of said control means (APC_In) at the assistance PC equipment; and
- displaying a user visualization (UAA) of said assistance avatar in overlay onto said display (USCR) of the user PC equipment (UPC).

2. The method according to claim 1, **characterized in that** said method comprises the step of displaying an assistant visualization (AAA) of said assistance avatar into said virtual environment at the assistance PC equipment (APC).

3. The method according to claim 2, **characterized in that** said method comprises the step of displaying said user visualization (UAA) of the assistance avatar in overlay onto said display (USCR) of the user PC equipment (UPC) relative to the position and orientation of said assistant visualization (AAA) of the assistance avatar in said virtual environment at the assistance PC equipment (APC).

4. The method according to claim 1, **characterized in that** said method comprises the steps of
- capturing a live view (U3DV) of the real environment of said user PC equipment (UPC); and
- displaying said live view into said virtual environment at the assistance PC equipment (APC).

5. The method according to the claims 2 and 4, **characterized in that** said method comprises the step of displaying said assistant visualization (AAA) of the assistance avatar into said virtual environment at the assistance PC equipment (APC) between said live copy of the display (USCR) of the user PC equipment (UPC) and said live view (U3DV) of the real environment of the user PC equipment.

6. The method according to claim 1, **characterized in that** said virtual environment at the assistance PC equipment (APC) is a 3D virtual environment.

7. The method according to the claims 2 and 6, **characterized in that** said assistant visualization (AAA) of the assistance avatar comprises a visual representation in said 3D virtual environment of at least the position, orientation, movement and rotation of said assistance avatar.

8. A remote control system comprising a user PC equipment (UPC) remotely coupled to an assistance PC equipment (APC) associated to a virtual world server (VW_Server), wherein
said assistance PC equipment is adapted to receive a live copy of the display (USCR) of said user PC equipment into a virtual environment, and
said assistance PC equipment is provided with control means (APC_In) adapted to operate said user PC equipment,
**characterized in that** said virtual world server (VW_Server) is adapted to create an assistance avatar of which the movements are associated to the operations of said control means (APC_In) at the assistance PC equipment (APC),
and **in that** said remote control system further comprises a user control logic (AvC) adapted to display a user visualization (UAA) of said assistance avatar in overlay onto said display (USCR) of the user PC equipment (UPC).

9. The remote control system according to claim 8, **characterized in that** said remote control system further comprises an assistant control logic (AvS) adapted to display an assistant visualization (AAA) of said assistance avatar into said virtual environment at the assistance PC equipment (APC).

10. The remote control system according to claim 9,
**characterized in that** said user PC equipment (UPC) is provided with video input means (WCM1, WCM2) adapted to capture a live view (U3DV) of the real environment of said user PC equipment,
and **in that** said assistant control logic (AvS) is further adapted to display said live view into said virtual environment at the assistance PC equipment (APC).

11. The remote control system according to claim 8,
**characterized in that** said control means (APC_In) of the assistance PC equipment (APC) are input controlsadapted to control operations of said user PC equipment (UPC),
and **in that** said user control logic (AvC) is further adapted to associate at least the position, orientation, movement and rotation of said user visualization (UAA) of the assistance avatar to said operations of the user PC equipment.

12. The remote control system according to claim 9, **characterized in that** said remote control system operates as a client-server system wherein said user control logic (AvC) is coupled between said virtual world server (VW_Server) and said user PC equipment (UPC), and wherein assistant control logic (AvS) is located in said virtual world server.

13. The remote control system according to claim 9, **characterized in that** said remote control system operates as a peer-to-peer system wherein said user control logic (AvC) is coupled between said assistance PC equipment (APC) and said user PC equipment (UPC), and wherein said assistant control logic (AvS) is located in said assistance PC equipment.

14. The avatar control logic according to any of the claims 8 to 13, **characterized in that** said remote control system is adapted to operate according to the method as of the claims 1 to 7.
